# EUROPEAN PATENT APPLICATION

(11) **EP 4 781 819 A1**
(43) Date of publication of application: **29.07.2026**
(21) Application number: 25227797.5
(22) Date of filing: 30.12.2025
(51) Int. Cl.: A01G 24/50, D06M 15/507, D06M 23/08, D06M 11/74, D06M 101/02, E02D 17/20

(54) **SOIL REHABILITATION GEOTEXTILE STRUCTURE AND USES THEREOF**

(30) Priority: 30.12.2024 PT 2024119951
(71) Applicant: Oprimee - Innovation Design Engineering Solutions, Lda, 3405-155 Oliveira do Hospital (PT)
(72) Inventor: DOS SANTOS ALMEIDA NUNES, JOÃO MIGUEL, 3405-155 OLIVEIRA DO HOSPITAL (PT)
(74) Representative: Patentree

(57) **Abstract**

The present disclosure relates to a biodegradable geotextile structure for soil rehabilitation comprising a woven fabric structure of filament yarns of a natural fiber; at least a polymer selected from polylactic acid (PLA) and polyhydroxyalkanoates (PHA) polymers, or mixtures thereof; and particles of activated carbon. Furthermore, the present disclosure relates to a method for producing said biodegradable geotextile structure.

## Description

### TECHNICAL FIELD

The present disclosure pertains to a biodegradable geotextile structure, preferably a biodegradable geotextile mat, that provides an innovative solution for ecological rehabilitation and sustainable agriculture, leveraging natural materials and technologies to foster healthier soils, improve plant establishment, and support ecosystem recovery.

### BACKGROUND

Agriculture and environmental management currently face significant challenges related to soil degradation, erosion, and the need for more sustainable practices. Conventional geotextiles have been widely used for soil stabilization and erosion control. However, these materials, typically made from synthetic polymers derived from non-renewable resources, present a major environmental issue as they contribute to plastic pollution, with slow decomposition that disrupts local ecosystems. Furthermore, these geotextiles do not offer additional features for efficient water management or enhanced soil interaction.

In recent years, the impact of wildfires on soil health has become a growing concern. Wildfires, which are increasing in frequency and intensity due to climate change, severely affect soil structure and fertility. The intense heat from fires can cause soil hydrophobicity, making it difficult for water to penetrate the soil and increasing the risk of erosion. Additionally, wildfires often leave the soil barren, making it more vulnerable to degradation and less capable of supporting new vegetation. This exacerbates the difficulty of restoring fire-damaged landscapes.

The recovery of burned areas remains a significant challenge for land restoration efforts. Traditional methods of rehabilitation often struggle to address the complex interactions between fire-damaged soils, invasive species, and the need for long-term ecosystem regeneration. The difficulty lies in the fact that fire-impacted soils often require specialized treatments to restore their structure, fertility, and ability to retain water. Current technologies lack the necessary functionality to support such restoration effectively, particularly in the context of areas prone to recurring wildfires.

Recently, there has been growing interest in biodegradable alternatives, such as geotextiles made from natural fibres and renewable materials. However, most of these solutions still face challenges regarding durability, resistance to extreme environmental conditions, and effectiveness in controlling invasive vegetation and promoting ecosystem regeneration, which is why it is imperative that new alternatives emerge.

These facts are disclosed in order to illustrate the technical problem addressed by the present disclosure.

### GENERAL DESCRIPTION

The present disclosure relates to a biodegradable geotextile structure for soil rehabilitation comprising: a woven fabric structure of filament yarns of a natural fiber; at least a polymer selected from polylactic acid (PLA) and polyhydroxyalkanoates (PHA) polymers, or mixtures thereof; particles of activated carbon; wherein the at least a polymer and the activated carbon are trapped in the apertures of the woven mesh of the woven fabric structure.

In the context of the present disclosure, the expression 'trapped in the apertures of the woven mesh' refers to mechanical immobilisation of activated carbon particles within the mesh apertures by a discontinuous biodegradable polymer phase that bridges fibres locally without forming a continuous film or sealing inter-fibre voids.

Surprisingly, the geotextile structure of the present disclosure not only provides improved stabilization and rehabilitation of the soil but is also biodegradable.

The biodegradable geotextile structure of the present disclosure provides the following advantages:
Biodegradability: The geotextile decomposes naturally over time, eliminating waste and pollution concerns.
Soil Rehabilitation: Activated carbon plays a crucial role in supressing unwanted plant competition,
creating a more favourable environment for the growth of desired plants; and the natural fibers promote beneficial microbiota, supporting ecosystem health;
Strength and Stability: The woven fabric structure and the polymers(s) provide improved resistance and stability while maintaining the biodegradable characteristic of the geotextile structure.

In an embodiment for better results, the biodegradable geotextile structure comprises a mixture of PLA (polylactic acid) and PHA (polyhydroxyalkanoates) polymers, which together provide greater resistance and stability, while allowing the mat to maintain its previously mentioned biodegradable characteristic.

The biodegradable geotextile structurepromotes positive soil interaction, supporting beneficial microbiota essential for ecosystem health, and it also has water retention properties, which are essential for plant survival in dry climates, while ensuring proper drainage in intense rainfall conditions.

An aspect of the present disclosure relates to a biodegradable geotextile structure for soil rehabilitation comprising: a woven fabric structure of filament yarns of a natural fiber; at least a polymer selected from polylactic acid (PLA) and polyhydroxyalkanoates (PHA) polymers, or mixtures thereof; particles of activated carbon; wherein the at least a polymer and the activated carbon are trapped in the apertures of the woven mesh of the woven fabric structure.

An aspect of the present disclosure relates to a biodegradable geotextile structure for soil rehabilitation comprising: a woven fabric structure formed from filament yarns of natural fibres, defining mesh apertures; at least one biodegradable polymer selected from polylactic acid (PLA), polyhydroxyalkanoates (PHA) polymers, or mixtures thereof; particles of activated carbon; wherein the biodegradable polymer is present as a discontinuous coating or impregnation associated with the filament yarns and retained within the mesh apertures, the biodegradable polymer being present as an add-on in an amount of 2 to 45 wt.%, relative to the dry mass of the woven fabric structure; wherein the activated carbon is present as discrete particles mechanically immobilised within the mesh apertures by the biodegradable polymer, the activated carbon being present as an add-on in an amount of 1 to 35 wt.%, relative to the dry mass of the woven fabric structure; wherein the mass ratio of activated carbon solids to biodegradable polymer solids is 0.2:1 to 2:1; wherein the biodegradable polymer impregnation does not form a continuous film and the geotextile retains open inter-fibre porosity and water permeability characteristic of erosion-control geotextiles.

A biodegradable geotextile structure is provided for use in soil rehabilitation and erosion-control applications. The structure is configured as a woven fabric formed from filament yarns of natural fibres, such as plant-derived fibres, which are interlaced to define a mechanically stable mesh having open apertures between intersecting yarns. The woven configuration ensures flexibility, structural integrity, and permeability to water and air when the geotextile is placed in contact with soil.

An aspect of the present disclosure relates to a biodegradable geotextile structure for soil rehabilitation comprising: a woven fabric structure formed from filament yarns of natural fibres, defining mesh apertures; at least one biodegradable polymer selected from polylactic acid, polyhydroxyalkanoates, or mixtures thereof; and particles of activated carbon; wherein the biodegradable polymer is present as a discontinuous coating or impregnation associated with the filament yarns and retained within the mesh apertures, the biodegradable polymer being present in an amount of from 2 to 45 wt.%, relative to the dry mass of the woven fabric structure; wherein the activated carbon is present as discrete particles mechanically immobilised within the mesh apertures by the biodegradable polymer, the activated carbon being present in an amount of from 1 to 35 wt.%, relative to the dry mass of the woven fabric structure; wherein the mass ratio of activated carbon to biodegradable polymer is from 0.2:1 to 2:1; wherein the biodegradable polymer impregnation does not form a continuous film and the geotextile retains open inter-fibre porosity and water permeability characteristic of erosion-control geotextiles.

In an embodiment, the mesh apertures of the geotextile structure comprise a size from 0.5 to 15 mm, preferably from 1 to 10 mm, more preferably from 2 to 6 mm.

In an embodiment, the geotextile structure comprises a grammage from 80 to 800 g/m², preferably from 120 to 600 g/m², more preferably from 200 to 450 g/m².

In an embodiment, the total thickness of the geotextile structure is ranging from 0.3 to 8 mm, preferably from 0.6 to 5 mm, more preferably from 1 to 3 mm.

In an embodiment, the woven fabric structure of the geotextile structure is an open weave selected from plain weave, leno weave, semi-leno weave or stabilised textile grid.

In an embodiment, the biodegradable polymer of the geotextile structure is present as an add-on in an amount from 5 to 30 wt.%, preferably from 8 to 20 wt.%.

In an embodiment, the activated carbon of the geotextile structure is present as an add-on in an amount from 3 to 25 wt.%, preferably from 5 to 15 wt.%.

The woven fabric is combined with at least one biodegradable polymer selected from polylactic acid (PLA), polyhydroxyalkanoates (PHA), or mixtures thereof. The biodegradable polymer is applied to the woven fabric as a discontinuous coating and/or impregnation associated with the filament yarns and extending at least partially into regions of the mesh apertures. The polymer is present in a controlled amount such that it does not form a continuous film on the yarns and does not block the apertures of the mesh.

Activated carbon is incorporated into the geotextile in the form of discrete particles. The activated carbon particles are introduced into the mesh apertures of the woven fabric and are mechanically immobilised therein by the biodegradable polymer. Mechanical immobilisation may be achieved by adhesion of the polymer to the particles, partial encapsulation of the particles, and/or polymer bridging between adjacent filament yarns, while avoiding complete encapsulation or sealing of the mesh apertures.

The biodegradable polymer and the activated carbon are present as add-on components relative to the dry mass of the woven fabric prior to their application. The relative amounts of biodegradable polymer and activated carbon are selected such that the polymer effectively retains the activated carbon particles within the mesh apertures while maintaining the permeability and porosity of the geotextile. The mass ratio between activated carbon and biodegradable polymer is adjusted to balance mechanical retention, biodegradation behaviour, and functional performance in soil environments.

In use, the biodegradable geotextile structure is placed on or within soil to provide erosion control, soil stabilisation, and soil rehabilitation. Over time, the natural fibre yarns and the biodegradable polymer undergo biodegradation under environmental conditions, allowing gradual integration of the materials into the soil.

In an embodiment for better results, the ratio between polylactic acid: polyhydroxyalkanoate polymer ranges from 60:40 to 40:60.

In an embodiment for better results, the filament yarns of the woven fabric structure are selected from a list consisting of jute filament yarn, coconut coir filament yarn, hemp filament yarn, cotton filament yarn, flax (linen) filament yarn, polylactic acid (PLA) filament yarn, polyhydroxyalkanoates (PHA) filament yarn, polybutylene succinate (PBS) filament yarn, algae-based filament yarn, silk filament yarn, soy protein filament yarn, biopolymer-coated natural yarn, and their combinations.

In an embodiment for better results, the particle size of the particles of activated carbon (this is activated charcoal) ranges from 0.5 µm to 5 mm as determined by laser diffraction for particles below 500 µm and by sieve analysis for particles above 500 µm.

In an embodiment for better results, the grammage of the geotextile ranges from 50 to 1500 g/m².

In an embodiment for better results, the biodegradable polymer undergoes progressive degradation over a period of weeks to months, maintaining mechanical integrity during initial plant establishment.

In an embodiment for better results, the biodegradable geotextile structure herein described may be use in rehabilitation of wildfire-impacted soils, wherein the structure mitigates soil hydrophobicity, erosion and allelopathic inhibition following fire events.

Another aspect of the present disclosure relates to a geotextile mat, sheet or roll comprising the biodegradable geotextile structure herein described.

Another aspect of the present disclosure relates to a method for producing a biodegradable geotextile structure comprising the steps of:
weaving a fabric structure of filament yarns of natural fibers;
treating the woven fabric structure with a solution or suspension comprising at least one polymer selected from PLA, PHA, or mixtures thereof, and activated carbon particles;
drying the treated woven fabric structure to trap the polymer and activated carbon within the mesh apertures of the woven fabric structure.

Another aspect of the present disclosure relates to a method for producing a biodegradable geotextile structure as described, comprising the steps of: weaving a fabric structure from filament yarns of natural fibers to form a mesh having apertures; impregnating or coating the woven fabric with a suspension comprising activated carbon particles and at least one biodegradable polymer selected from PLA, PHA or mixtures thereof, the suspension having a solids content selected such that the polymer is deposited as a discontinuous coating without forming a continuous film; controlling pick-up level, viscosity and drying conditions so as to immobilise the activated carbon within the mesh apertures while preserving open inter-fibre porosity and water permeability of the geotextile.

Although geotextiles are widely used for mechanical soil functions and activated carbon is known as an adsorbent in water treatment, it would not be predictable for the skilled person that the specific combination of an open woven natural-fibre structure, immobilised activated carbon, biodegradable polymer fixation and superficial soil application would simultaneously result in effective biochemical mitigation of allelopathy, measurable improvement of the superficial soil water regime, preservation of mechanical integrity, absence of significant negative impact on soil microbiota, and functional persistence over agronomically relevant periods. Laboratory tests, physical measurements and field trials demonstrate that these effects do not arise from the mere addition of known components, but from a synergistic interaction between the textile structure, the immobilised adsorbent and the biodegradable binder. This synergy leads to technical effects that are unexpected in view of the state of the art.

### BRIEF DESCRIPTION OF THE DRAWINGS

The following figures provide preferred embodiments for illustrating the disclosure and should not be seen as limiting the scope of invention.
**Figure 1****:** General view of the biodegradable geotextile mat (1) used for soil rehabilitation.
**Figure 2****:** Biodegradable geotextile mat (1) for soil rehabilitation, which facilitates the development of the root system and healthy plant growth, as well as the improvement of soil quality.
**Figure 3****:** Illustration that, after the application of the biodegradable geotextile mat (1), the plants of interest grow healthily, free from competition. It also depicts the degradation of the biodegradable geotextile mat (1) over time.
**Figure 4:** i) a close-up view of the biodegradable geotextile mat (1), (ii) highlighting its components: natural fibres (2), PLA (polylactic acid) and PHA (polyhydroxyalkanoates) (3), and activated carbon (4).
**Figure 5****:** Cross-sectional view of the soil, showing the biodegradable geotextile mat (1) applied between the surface layer of the soil (5) and the soil substrate (6), where root development occurs.

### DETAILED DESCRIPTION

A biodegradable geotextile structure for soil rehabilitation and erosion-control applications is disclosed. The geotextile comprises a woven fabric formed from filament yarns of natural fibres defining mesh apertures. At least one biodegradable polymer selected from polylactic acid (PLA), polyhydroxyalkanoates (PHA), or mixtures thereof is present as a discontinuous coating and/or impregnation associated with the filament yarns and extending into the mesh apertures without forming a continuous film. Activated carbon is incorporated in particulate form and mechanically immobilised within the mesh apertures by the biodegradable polymer. The biodegradable polymer and activated carbon are present as add-on components relative to the dry mass of the woven fabric, with a controlled mass ratio that maintains open inter-fibre porosity and water permeability characteristic of erosion-control geotextiles. The structure provides combined erosion control and adsorption-based soil remediation while remaining biodegradable under environmental conditions.

The present disclosure relates to a biodegradable geotextile structure for soil rehabilitation comprising:
a woven fabric structure of filament yarns of a natural fiber;
at least a polymer selected from polylactic acid (PLA) and polyhydroxyalkanoates (PHA) polymers,
or mixtures thereof;
particles of activated carbon; wherein the at least a polymer and the activated carbon are trapped in the apertures of the woven mesh of the woven fabric structure.

The geotextile structure of the present invention comprises the following components:
Woven Fabric Structure: The fabric is formed from filament yarns of natural fibers. These fibers are selected for their natural biodegradability and mechanical strength.
Polymers: The geotextile comprises at least one polymer selected from polylactic acid (PLA), polyhydroxyalkanoates (PHA), or mixtures thereof. PLA and PHA are biodegradable polymers that decompose into natural byproducts under microbial activity in soil.
Activated Carbon: Activated carbon supresses unwanted plant competition, creating a more favourable environment for the growth of desired plants;
Structural Configuration: The polymers and activated carbon are trapped in the apertures of the woven mesh of the fabric. The mesh apertures provide a physical entrapment mechanism, preventing the polymer and activated carbon particles from prematurely dislodging during handling or deployment.

The geotextile structure of the present disclosureensures stability, durability, and environmental resistance, making it suitable for ecological rehabilitation. The use of sustainable natural fibers enhances biodegradability and supports beneficial soil microbiota, promoting ecosystem health. Activated carbon inclusion helps control unwanted plant species, fostering the growth of desired plants by reducing competition for resources. This biodegradable geotextile prevents soil erosion, protects plant growth, and retains water while ensuring proper drainage. It is particularly effective in forest rehabilitation, post-fire soil recovery, and environmental conservation projects. This geotextile structure represents a significant step toward sustainable land management, promoting long-term ecological restoration, biodiversity preservation, and the fight against desertification.

The present disclosure relates to a biodegradable geotextile structure developed for soil rehabilitation, particularly suited for the restoration of degraded ecosystems, such as forest areas or post-fire soils. It also provides a viable solution for environmental conservation projects and sustainable agricultural practices.

The present disclosure represents a significant advancement in addressing contemporary environmental challenges, offering a biodegradable, effective, and sustainable solution for ecosystem rehabilitation and preservation.

The biodegradable geotextile structure is designed to provide high stability, strength, and exceptional durability under challenging environmental conditions. Its formulation ensures not only resistance and longevity but also effective performance in applications such as the rehabilitation of forested areas, particularly in post-fire scenarios.

While its primary application focuses on soil restoration in these environments, the geotextile structure is versatile and can be used in a range of other situations requiring soil stabilization and erosion control, being capable of maintaining its integrity during the initial growth phase and root development of plants.

The water retention capacity of this biodegradable geotextile structure is essential for plant survival in dry climates and promotes proper drainage in conditions of heavy rainfall, ensuring responsible and effective environmental management over the long term.

Referring to the figures, some embodiments of the disclosure are described in greater detail. However, it should be understood that these embodiments are not intended to limit the scope of the application.

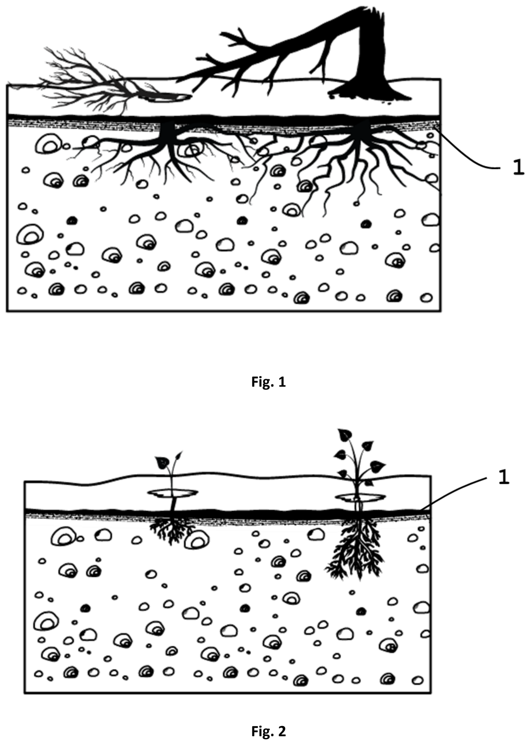

The general concept of this disclosure is represented in Figure 1, which shows a biodegradable geotextile structure (1) developed for soil rehabilitation placed on the degraded soil to be rehabilitate. It is particularly suited for the restoration of degraded ecosystems, such as forest areas or post-fire soils, and also provides a viable solution for environmental conservation projects and sustainable agricultural practices. In the evolution of soil recovery over time also occurs.

One of the most important features of this biodegradable geotextile structure for soil rehabilitation is its biodegradability. As time progresses, the biodegradable geotextile mat gradually degrades due to its natural composition Figure 2. However, this degradation process is slower than the root development of the plant of interest, ensuring that the plant can establish and grow.

Biodegradation is a process in which the polymers are broken down into smaller molecules by microorganisms present in the environment, such as bacteria and fungi. The decomposition of the polymers occurs via hydrolysis, in which their chemical bonds are broken into sugars, acids, and alcohols. These residues are absorbed by the microorganisms, which convert them into energy and biomass, thereby supporting the life of the ecosystem and contributing to various cycles, such as the energy cycle.

However, polymers do not degrade under all conditions. Several factors influence this process, including temperature, humidity, pH, oxygenation of the environment, polymer size, and the presence of microorganisms. The presence of these factors significantly accelerates the decomposition process, similar to composting, which generates rich organic matter.

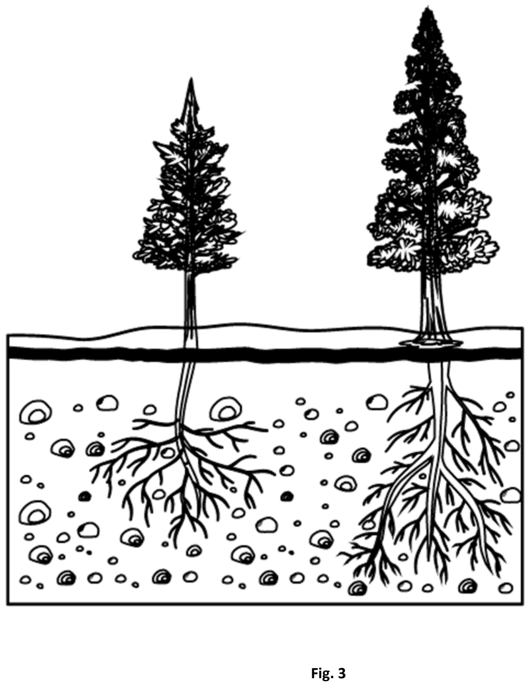

As long as traces of the geotextile structure remain, there is a continuous improvement in the soil, even after its initial recovery. Eventually, the biodegradable mat will fully degrade Figure 3, and at that point, the plants of interest will be able to thrive without competition from undesirable flora.

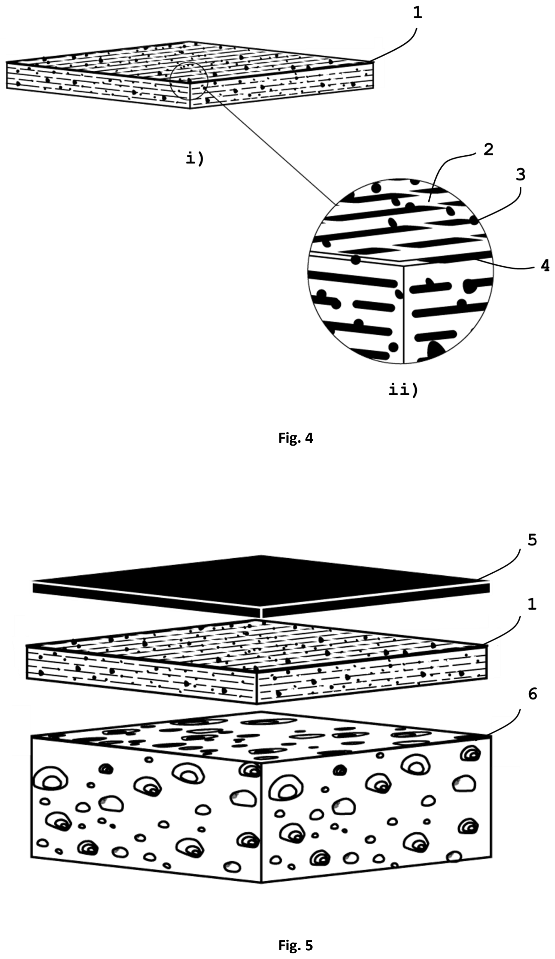

Figure 4 schematically represents an embodiment of the composition of the biodegradable geotextile structure (1), which includes the following components:
- Natural fibers (2) that enhance the product's biodegradability and promote positive soil interaction. These fibers support beneficial microbiota essential for ecosystem health.
- A combination of PLA (polylactic acid) and PHA (polyhydroxyalkanoates) polymers (3), which together provide greater resistance and stability while allowing the mat to maintain its biodegradable characteristic. While its primary application focuses on soil restoration in these environments, the biodegradable geotextile structure is versatile and can be used in a range of other situations requiring soil stabilization and erosion control. It is capable of maintaining its integrity during the initial growth phase and root development of plants. This formulation not only provides high stability and strength to the biodegradable geotextile structure but also ensures superior durability under challenging environmental conditions, making it an effective solution for various ecological rehabilitation contexts.
- Activated carbon (4), which plays a crucial role in suppressing unwanted plant competition, thereby creating a more favorable environment for the growth of desired plants.

Figure 5 schematically illustrates how the biodegradable geotextile strcture (1) should be placed, which is between the visibly degraded surface of the soil (5) to be rehabilitated and the soil substrate (6), where root development occurs, allowing for the growth of desired plants without competition.

The formulation of the biodegradable geotextile structure for soil rehabilitation also confers water retention properties, which are essential for plant survival in dry climates, while ensuring proper drainage during intense rainfall conditions. This invention represents a significant advancement in addressing contemporary environmental challenges, offering a biodegradable, effective, and sustainable solution for ecosystem rehabilitation and preservation.

The water retention capacity of this biodegradable geotextile structure is essential for plant survival in dry climates and promotes proper drainage in conditions of heavy rainfall, ensuring responsible and effective environmental management over the long term.

The biodegradable geotextile structure of the present disclosure provides the following properties:
- the degradation of the geotextile structure occurs gradually over time, providing continuous improvement to the soil until the mat has fully degraded, at which point the plants are able to thrive without competition;
- it is suitable for use in wildfire-impacted soils, providing a solution for the restoration of fire-damaged landscapes by improving soil structure, fertility, and water retention;
- it exhibits a controlled biodegradation process, facilitated by environmental factors such as temperature, humidity, and microbial activity, to enhance soil health and support long-term ecosystem regeneration;
- it is suitable for use in sustainable agricultural practices, providing a solution for soil erosion control and improving plant establishment in a variety of environmental conditions;
- its degradation rate is slower than the plant's root growth, thus allowing plants to establish and grow without disruption or competition from undesirable flora;
- the geotextile structure is designed to provide high stability, strength, and exceptional durability under challenging environmental conditions, such as extreme temperatures, heavy rainfall, and dry climates.

In an embodiment, the biodegradable geotextile structure comprises polylactic acid (PLA), polyhydroxyalkanoates (PHA), or mixtures thereof, incorporated into the woven natural-fibre support in a manner that preserves the fibrous and porous character of the geotextile. The polymers are not present as a continuous film or laminated layer, but rather as a discontinuous coating or impregnation associated with the fibres and retained within the apertures of the woven mesh. The polymer content is therefore defined as an add-on relative to the dry mass of the woven natural-fibre support.

In this context, the PLA and/or PHA polymers are present in an amount ranging from 2 to 45% by weight relative to the dry woven support, preferably from 5 to 30% by weight, and more preferably from 8 to 20% by weight. These ranges provide sufficient polymer material to act as a binder that improves mechanical stability and enables retention of particulate matter, while avoiding excessive pore sealing or coalescence that would otherwise transform the geotextile into a substantially non-porous polymer film. As a result, the structure maintains its character as a woven fibrous geotextile rather than a solid sheet.

In an embodiment, the activated carbon is incorporated into the geotextile structure as discrete particles mechanically retained within the mesh apertures and bound to the fibrous structure by the biodegradable polymer binder. The activated carbon content is likewise expressed as an add-on relative to the dry mass of the woven natural-fibre support.

In an embodiment, the activated carbon is present in an amount ranging from 1 to 35% by weight relative to the dry woven support, preferably from 3 to 25% by weight, and more preferably from 5 to 15% by weight. These ranges ensure that the activated carbon contributes effectively to soil interaction and suppression of unwanted vegetation, while maintaining sufficient mechanical integrity, cohesion, and resistance to abrasion during handling, installation, and early service life of the geotextile.

In order to ensure physical coherence of the composite structure and effective retention of activated carbon particles, the mass ratio between activated carbon solids and PLA/PHA polymer solids is controlled. In an embodiment, the mass ratio of activated carbon to PLA/PHA polymer solids ranges from 0.2:1 to 2:1, preferably from 0.5:1 to 1.5:1. This ratio avoids configurations in which excessive particulate loading is present without sufficient polymer binder, which could otherwise lead to poor cohesion, particle loss, or reduced mechanical performance of the geotextile.

In an embodiment, the woven fabric structure of the biodegradable geotextile comprises mesh apertures sized to enable mechanical entrapment of the polymer binder and activated carbon particles while maintaining the functional properties of a geotextile for soil rehabilitation, erosion control, and drainage. In an embodiment, the mesh apertures have dimensions ranging from 0.5 to 15 mm, preferably from 1 to 10 mm, and more preferably from 2 to 6 mm. Apertures within these ranges allow effective retention of the particulate components without compromising soil separation, filtration, or surface stabilization functions.

In an embodiment, the biodegradable geotextile structure is configured as a flexible mat, sheet, or roll with dimensions suitable for handling, installation, and long-term performance in degraded soils. In an embodiment, the thickness of the geotextile ranges from 0.3 to 8 mm, preferably from 0.6 to 5 mm, and more preferably from 1 to 3 mm. Thicknesses within these ranges are characteristic of woven or non-woven geotextiles and are distinct from thin polymer films.

In an embodiment, the grammage of the geotextile preferably ranges from 80 to 800 g/m², more preferably from 120 to 600 g/m², and most preferably from 200 to 450 g/m². These grammage values provide a balance between mechanical robustness, ease of deployment, and biodegradability, ensuring suitability for soil rehabilitation applications, including post-fire restoration and erosion control on degraded land.

In an embodiment, the treatment process is carried out under conditions that prevent complete filling of the inter-fibre voids and avoid total coalescence of the polymer phase. Parameters such as polymer concentration, viscosity, pick-up level during impregnation, and drying conditions are selected such that the geotextile retains an open porous structure and water permeability compatible with geotextiles intended for drainage and erosion control. As a result, the biodegradable geotextile maintains sufficient permeability to water and gases, supporting root development, soil aeration, and controlled water retention while ensuring mechanical stability during the initial phases of plant establishment.

The functional geotextile mat operates through a predominantly physicochemical mechanism that reduces the bioavailability of allelochemical compounds present in the soil solution. Such compounds, which are released from plant residues, root exudates, or invasive vegetation, include, without limitation, phenolic acids, flavonoids, coumarins, aromatic lactones and other secondary metabolites known to inhibit seed germination, root elongation and beneficial microbial activity. The activated carbon immobilised within the fibrous structure of the geotextile exhibits a high specific surface area and a distribution of micro- and mesopores, enabling selective adsorption of these allelochemicals through physicochemical interactions such as Van der Waals forces, π-π interactions and retention within microporous structures.

In an embodiment, as water percolates through the geotextile during rainfall, irrigation or capillary moisture movement, dissolved allelochemicals come into contact with the immobilized adsorbent and are captured at or near the soil surface. This mechanism reduces the dissolved fraction of phytotoxic compounds before they migrate deeper into the soil profile or reach seeds and developing roots. In this manner, the geotextile establishes a biochemically active superficial zone that mitigates allelopathic effects while preserving soil permeability and drainage.

In addition to the primary mechanism of allelochemical mitigation, a secondary and context-dependent modulation of nutrient availability may occur. Depending on soil properties, pH, water chemistry and the surface chemistry of the activated carbon, indirect effects on the availability of mineral nitrogen species and phosphate ions may be observed. These effects arise from competitive adsorption of dissolved organic compounds, reduction of phytotoxic substances that interfere with root uptake, and stabilization of nutrients within the superficial soil layer. This secondary effect is not essential to the core function of the disclosed technology, which resides in the mitigation of chemical allelopathy, but may contribute to improved plant establishment in certain soil systems.

To achieve effective biochemical performance without compromising mechanical integrity or porosity, the activated carbon is incorporated into the geotextile as an areal loading immobilized by a biodegradable polymer matrix. Typical operational values range from moderate areal loads that provide partial mitigation to higher loads that create a highly effective reactive zone with extended functional persistence. The biodegradable polymer, comprising PLA, PHA or mixtures thereof, acts as a fixation agent that anchors the activated carbon within the fibrous structure while avoiding the formation of a continuous polymer film. The mass ratio between activated carbon and polymer solids is selected to ensure structural cohesion, preservation of inter-fibre porosity and maintenance of hydraulic permeability characteristic of erosion-control geotextiles.

The functional effect of the geotextile mat is concentrated in the superficial soil layer, where the release and accumulation of allelochemicals are most pronounced. Maximum effectiveness is observed within the upper centimeters of the soil, where direct contact with percolating water and root exudates occurs. At greater depths, the effect decreases progressively and becomes residual. The depth of influence may be increased by shallow incorporation of the geotextile into the soil or by the use of thicker or three-dimensional textile structures, while remaining within the scope of surface-oriented soil rehabilitation applications.

The duration of the biochemical effect results from a balance between the adsorption capacity of the activated carbon, competition with dissolved organic matter, the rate of continuous allelochemical production in the soil, and the stability of the polymer-based immobilization system. Under practical field conditions, the functional geotextile exhibits effective performance for periods ranging from several weeks to several months, particularly following critical events such as incorporation of plant residues, invasive vegetation control or post-fire soil restoration. In soils with low concentrations of dissolved organic matter, a prolonged buffering effect may be observed.

Leaching and percolation studies demonstrate that the activated carbon remains substantially immobilized within the fibrous matrix of the geotextile. Particle loss remains below technically acceptable thresholds, as confirmed by measurements of total suspended solids, eluate turbidity and mass balance before and after testing. The biodegradable polymer binder undergoes progressive biological degradation without releasing significant amounts of toxic or harmful compounds, as assessed by dissolved organic carbon measurements and plant ecotoxicity assays based on germination and root elongation. These results confirm the environmental stability of the functional system during its intended period of use.

The functional geotextile mat is compatible with soil microbiota and does not exert direct toxic effects on heterotrophic bacteria, saprophytic fungi or arbuscular mycorrhizal fungi under appropriate soil conditions. Transient changes in microbial community structure may occur as a consequence of reduced bioavailability of toxic organic compounds; however, such changes are non-deleterious and may be beneficial for soil restoration processes. Compatibility may be evaluated using standard indicators such as soil basal respiration, enzymatic activity, total microbial biomass and mycorrhizal colonization in model plants.

The geotextile is designed to exhibit mechanical properties compatible with installation, handling and operation in soil environments, while maintaining structural integrity throughout the functional period. Minimum tensile strength values in both machine and cross directions ensure dimensional stability and resistance to environmental stresses. Elongation at break allows accommodation of soil deformation without brittle failure. The incorporation of the functional system does not cause an excessive reduction in mechanical strength relative to the untreated textile support.

The textile structure is preferably an open woven configuration selected to balance mechanical resistance, hydraulic permeability and retention of the functional filling. Suitable weaving patterns include open plain weave, leno or semi-leno structures and stabilized textile grids. Yarn densities are selected to produce stable and repeatable mesh apertures capable of retaining the functional system.

The biodegradable polymer binder undergoes progressive degradation in soil environments, typically initiating several weeks after installation. Mass loss occurs gradually over months, allowing the geotextile to maintain structural integrity during the critical functional phase while reducing long-term environmental impact.

The following examples represent preferred and best modes of carrying out the disclosed technology and are provided for illustrative purposes only.

In a first example, a fibrous woven geotextile mat composed of natural fibres was produced with a base grammage of approximately 300 g/m², an average thickness of about 2.0 mm and a mean mesh aperture of approximately 3 mm. A functional system comprising activated carbon with a specific surface area exceeding 800 m²/g was applied at an areal load of approximately 120 g/m², together with a biodegradable PLA/PHA binder applied at approximately 90 g/m², corresponding to a mass ratio of activated carbon to polymer of about 1.33:1. The system was applied by controlled impregnation such that inter-fibre voids remained open and hydraulic permeability was preserved. The mat was installed on sandy-loam agricultural soil and partially incorporated to a depth of approximately 1 cm. A significant reduction in phytotoxicity associated with incorporated plant residues was observed, together with increased seed germination and maintenance of mechanical integrity after installation and irrigation.

In a second example, the geotextile mat was evaluated in soil column tests to assess depth and extent of the biochemical effect. Model phenolic compounds representative of natural allelochemicals were introduced into the soil. A reduction exceeding 70% in phenolic concentration was observed in the upper 2 cm of soil, with decreasing effects at greater depths, confirming the creation of a superficial reactive biochemical zone.

Further examples demonstrate negligible particle leaching under simulated rainfall, preservation of mechanical properties after functionalization, progressive and controlled biodegradation of the polymer binder, compatibility with soil microbiota, and superior agronomic performance compared with conventional geotextiles or dispersed activated carbon. Comparative studies confirm that the observed effects arise from the specific combination of an open woven textile structure, immobilized activated carbon and biodegradable polymer binder, and are not obtained by conventional geotextiles or by the isolated use of activated carbon.

The technical effects of the geotextile mat of the present disclosure were evaluated by comparative laboratory and controlled field experiments. Unless otherwise stated, the initial nutrient loading was 12.0 ± 0.5 g/m² for all tested systems, and cumulative release is expressed as percent of the initially loaded nutrient mass. Data are provided as representative results suitable to demonstrate the functional mechanism and measurable technical effect.

**Table 1 - Nutrient Release Kinetics Parameters**

| Parameter | Unit | Geotextile mat of the present disclosure | Conventional Biodegradable Geotextile | Conventional Granular Fertilizer |
|---|---|---|---|---|
| Initial nutrient loading | g/m² | 12.0 ± 0.5 | 12.0 ± 0.5 | 12.0 ± 0.5 |
| Release at 24 h | % | 8 ± 2 | 22 ± 4 | 35 ± 6 |
| Release at 7 days | % | 32 ± 5 | 48 ± 7 | 62 ± 8 |
| Release at 30 days | % | 68 ± 6 | 74 ± 6 | 85 ± 5 |
| Release at 60 days | % | 92 ± 4 | 95 ± 3 | 98 ± 2 |
| t50 (50% released) | days | 18 ± 2 | 11 ± 2 | 6±1 |
| Initial rate (0-3 days) | mg·m⁻²·day⁻¹ | 120 ± 15 | 260 ± 30 | 410 ± 45 |

As shown in Table 1, the geotextile mat of the present disclosure provides a substantially reduced initial burst compared with the conventional biodegradable geotextile and granular fertilizer, while still achieving high cumulative release over longer times. The delayed t50 and lower initial release rate indicate a progressive delivery profile compatible with the critical germination phase and reduced susceptibility to early leaching losses.

**Table 2 - Kinetic Model Fitting and Parameters**

| Kinetic model | Parameter | Geotextile mat of the present disclosure | Prior Art |
|---|---|---|---|
| Higuchi | kH (day^{-1/2}) | 0.18 | 0.32 |
| Korsmeyer-Peppas | n | 0.62 | 0.41 |
| Korsmeyer-Peppas | k | 0.21 | 0.38 |
| Correlation coefficient (R²) | - | 0.97 | 0.89 |

The fitting results in Table 2 show improved correlation for the geotextile mat of the present disclosure, with an R² of 0.97 under the reported conditions. The Korsmeyer-Peppas exponent n greater than 0.5 is consistent with anomalous transport, attributable to combined aqueous diffusion and progressive degradation of the geotextile matrix, a mechanism not present in conventional systems where nutrient release is largely independent of the structural evolution of the carrier.

**Table 3 - Correlation Between Biodegradation and Nutrient Release**

| Time | Geotextile mass loss (%) | Tensile strength retention (%) | Cumulative release (%) |
|---|---|---|---|
| 7 days | 4 ± 1 | 92 ± 3 | 32 ± 5 |
| 14 days | 9 ± 2 | 81 ± 4 | 48 ± 6 |
| 30 days | 18 ± 3 | 63 ± 5 | 68 ± 6 |
| 60 days | 35 ± 5 | 38 ± 6 | 92 ± 4 |

Table 3 demonstrates that cumulative nutrient release increases in parallel with geotextile mass loss and the controlled reduction of tensile strength. Under these representative conditions, the correlation between mass loss and cumulative release is high, with a Pearson correlation coefficient r of 0.94, supporting intentional coupling between biodegradation and functional release.

**Table 4 - Comparative Agronomic Efficiency (Controlled Field Trial)**

| Indicator | Unit | Geotextile mat of the present disclosure | Conventional Geotextile | No Mat |
|---|---|---|---|---|
| Germination rate | % | 91 ± 4 | 72 ± 6 | 54 ± 7 |
| Emergence homogeneity (CV) | % | 12 | 26 | 41 |
| Surface water retention | % | +45 | +18 | 0 |
| Leaching losses (total N) | % | -52 | -18 | - |
| Survival after 30 days | % | 88 ± 5 | 65 ± 8 | 47 ± 9 |

In the controlled field trial summarized in Table 4, the geotextile mat of the present disclosure produced higher germination and survival and a markedly reduced emergence coefficient of variation, indicating more homogeneous establishment. The observed increase in surface water retention and the reduction in nutrient leaching losses are consistent with the combined effects of local confinement, capillary moisture retention, and the biphasic controlled release profile.

Known biodegradable geotextiles are primarily used for erosion control and surface water retention and do not integrate a functional controlled nutrient release system, nor do they ensure local confinement of nutrients in the immediate vicinity of seeds. Conventional slow-release fertilizers are typically applied separately and remain susceptible to displacement and leaching, do not guarantee continuous contact with seeds, and do not provide mechanical protection of the germination zone.

By contrast, the geotextile mat of the present disclosure integrates geometric confinement of seeds and nutrients within mesh openings, capillary moisture retention, and a controlled biphasic release profile correlated with biodegradation. This integrated combination yields a measurable reduction in nutrient leaching and produces higher, more homogeneous, and more stable germination that is not predictable from a mere juxtaposition of known geotextiles and fertilizers.

To demonstrate soil-adaptive behavior, nutrient release was evaluated in agricultural soils of different textures under representative base conditions of 20-25 °C, pH 6.5-7.2, moisture at approximately 70% of field capacity, and simulated rainfall of 10 mm/day during the first 7 days followed by 5 mm/day up to 60 days, with the mat applied at the surface in intimate contact with soil.

**Table 5 - Nutrient Release Kinetics by Soil Type (Agricultural Conditions)**

| Soil texture | Release 24 h (%) | Release 7 days (%) | Release 30 days (%) | Release 60 days (%) | t50 (days) | Initial rate 0-3 d (mg·m⁻²·day⁻¹) |
|---|---|---|---|---|---|---|
| Sandy (low CEC) | 10 ± 2 | 36 ± 5 | 72 ± 6 | 94 ± 4 | 16 ± 2 | 140 ± 20 |
| Loamy (medium CEC) | 8 ± 2 | 32 ± 5 | 68 ± 6 | 92 ± 4 | 18 ± 2 | 120 ± 15 |
| Clay (high CEC) | 6 ± 2 | 28 ± 4 | 62 ± 6 | 89 ± 5 | 21 ± 3 | 95 ± 15 |

As summarized in Table 5, sandy soil shows a slightly higher initial release, consistent with higher hydraulic pull and lower ionic adsorption, while clay soil dampens early release and extends t50 due to higher cation exchange capacity and water retention. The loamy soil exhibits intermediate behavior.

**Table 6 - Nutrient Leaching Losses (Direct Comparison with Prior Art)**

| Soil | System | Leaching 0-14 d (%) | Leaching 0-60 d (%) |
|---|---|---|---|
| Sandy | Invention (mat) | 9 ± 2 | 18 ± 4 |
| Sandy | Conventional granular fertilizer | 22 ± 5 | 35 ± 7 |
| Loamy | Invention (mat) | 7 ± 2 | 15 ± 4 |
| Loamy | Conventional granular fertilizer | 18 ± 4 | 28 ± 6 |
| Clay | Invention (mat) | 5 ± 2 | 12 ± 3 |
| Clay | Conventional granular fertilizer | 12 ± 4 | 20 ± 5 |

Table 6 shows that, across soil textures, the geotextile mat of the present disclosure reduces nutrient recovery in eluate or drainage compared with conventional granular fertilization, particularly during the first 14 days when leaching susceptibility is highest.

**Table 7 - Degradation of the Geotextile versus Nutrient Release in Agricultural Soil**

| Time | Mass loss (%) | Tensile strength retention (%) | Cumulative release (%) |
|---|---|---|---|
| 7 days | 4 ± 1 | 92 ± 3 | 28-36 (soil-dependent) |
| 14 days | 9 ± 2 | 81 ± 4 | 42-55 |
| 30 days | 18 ± 3 | 63 ± 5 | 62-75 |
| 60 days | 35 ± 5 | 38 ± 6 | 89-94 |

In Table 7, cumulative release is reported as an interval because it varies with soil texture as reflected in Table 5, while the biphasic mechanism remains consistent in all cases, with an initial diffusion and capillarity contribution followed by a degradation-governed late phase.

**Table 8 - Agronomic Indicators by Soil Type (Controlled Field)**

| Soil | System | Germination (%) | Emergence CV (%) | Surface water retention vs control | Survival 30 d (%) |
|---|---|---|---|---|---|
| Sandy | Invention (mat) | 88 ± 5 | 14 | +40% | 84 ± 6 |
| Sandy | Conventional biodegradable geotextile | 70 ± 7 | 28 | +18% | 62 ± 8 |
| Sandy | No mat | 52 ± 8 | 43 | 0 | 45 ± 10 |
| Loamy | Invention (mat) | 91 ± 4 | 12 | +45% | 88 ± 5 |
| Loamy | Conventional biodegradable geotextile | 72 ± 6 | 26 | +18% | 65 ± 8 |
| Loamy | No mat | 54 ± 7 | 41 | 0 | 47 ± 9 |
| Clay | Invention (mat) | 86 ± 6 | 16 | +30% | 81 ± 7 |
| Clay | Conventional biodegradable geotextile | 68 ± 8 | 30 | +15% | 60 ± 9 |
| Clay | No mat | 50 ± 9 | 45 | 0 | 42 ± 10 |

Table 8 confirms that the geotextile mat of the present disclosure provides improved germination, improved emergence uniformity, and improved survival across soil textures, with the largest relative benefits typically observed in sandy soils where nutrient mobility and leaching propensity are elevated.

In one representative laboratory realization, nutrient release kinetics and leaching reduction are evaluated in leaching columns made of PVC having a height of 30 cm and an internal diameter of 10 cm, filled with dried and sieved agricultural soil (2 mm) prepared as sandy, loamy, and clay textures. The geotextile mat of the present disclosure is applied at the soil surface in intimate contact, with nutrient loading of 12.0 ± 0.5 g/m² and seed density of 10 ± 2 g/m². A first control uses a conventional biodegradable geotextile without nutrients with granular fertilizer applied at the surface at an equivalent dose, while a second control applies granular fertilizer without a mat. Simulated precipitation is applied at 10 mm/day for days 1-7 and 5 mm/day for days 8-60, at approximately 25 °C and pH 6.5-7.2. Eluate is collected in time fractions including 0-24 h, 1-3 days, 3-7 days, 7-14 days, 14-30 days, and 30-60 days, and nutrient concentrations are determined by analytical methods such as ion chromatography or UV-Vis for nitrate and ammonium, colorimetric analysis for phosphate, and ICP or FAAS for potassium. In parallel, geotextile mass loss, tensile retention, and microscopic evidence of surface degradation are determined to support coupling between degradation and release.

In a representative realization isolating the contribution of diffusion and degradation, mat samples of 10 cm by 10 cm are incubated in an aqueous medium at pH 6.8 with controlled conductivity at 20 °C and 30 °C, using both a static regime and a renewed medium regime with replacement every 24 hours to approximate sink conditions. Nutrients released are quantified at time points including 2 h, 6 h, 24 h, 3 days, 7 days, 14 days, and 30 days, while mass loss and tensile retention are measured at corresponding times. The resulting profiles maintain evidence of a late phase governed by degradation while allowing improved estimation of intrinsic early release rates under renewed conditions.

In a representative field realization, the geotextile mat of the present disclosure is evaluated on one-square-meter plots in sandy, loamy, and clay agricultural soils, with at least three replicates per condition. The geotextile mat of the present disclosure is installed over prepared soil with 12 g/m² nutrients and 8-12 g/m² seeds and is fixed using biodegradable staples. Controls include a conventional biodegradable geotextile combined with granular fertilizer and a condition without a mat. Surface moisture in the upper 0-3 cm is monitored during days 1-14 and subsequently weekly. Germination percentage, emergence coefficient of variation, and aboveground biomass at 30 days are measured, and drainage or leachate is collected where applicable using micro-lysimetry or collection boxes. Representative performance outcomes align with the agronomic indicators reported in Table 8 and leaching reduction reported in Table 6.

In a representative surface stabilization realization under intense rainfall, the geotextile mat of the present disclosure is applied on an experimental slope of approximately 15 to 25 degrees using a loamy-sandy soil, and rainfall is simulated at 30-50 mm/h for 30 minutes and repeated three times in one week. Sediment loss, displaced seed count, and germination after 14 days are determined, and reduced surface mobilization is observed in a manner consistent with the combined confinement and moisture retention mechanisms of the mat.

The experimental evidence demonstrates that the biodegradable geotextile mat of the present disclosure provides soil-adaptive, degradation-coupled, and spatially confined nutrient release, ensuring sustained nutrient availability during the germination and early growth stages while reducing nutrient losses by leaching. The combination of geometric confinement, capillary water retention, and biphasic release linked to biodegradation produces a measurable and reproducible technical effect that is not derivable in an obvious manner from conventional biodegradable geotextiles and conventional fertilization practices.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.
The following dependent claims further set out particular embodiments of the disclosure.

## Claims

1. A biodegradable geotextile structure for soil rehabilitation comprising:
a woven fabric structure formed from filament yarns of natural fibres, defining mesh apertures;
at least one biodegradable polymer selected from polylactic acid, polyhydroxyalkanoates, or mixtures thereof;
and particles of activated carbon;
wherein the biodegradable polymer is present as a discontinuous coating or impregnation associated with the filament yarns and retained within the mesh apertures, the biodegradable polymer being present in an amount of from 2 to 45 wt.%, relative to the dry mass of the woven fabric structure;
wherein the activated carbon is present as discrete particles mechanically immobilised within the mesh apertures by the biodegradable polymer,
the activated carbon being present in an amount of from 1 to 35 wt.%, relative to the dry mass of the woven fabric structure;
wherein the mass ratio of activated carbon to biodegradable polymer is from 0.2:1 to 2:1;
wherein the biodegradable polymer impregnation does not form a continuous film and the geotextile retains open inter-fibre porosity and water permeability characteristic of erosion-control geotextiles.

2. The biodegradable geotextile structure according to the previous claim, wherein the mesh apertures have a size from 0.5 to 15 mm, preferably from 1 to 10 mm, more preferably from 2 to 6 mm.

3. The biodegradable geotextile structure according to any of the previous claims, has a grammage from 80 to 800 g/m², preferably from 120 to 600 g/m², more preferably from 200 to 450 g/m².

4. The biodegradable geotextile structure according to any of the previous claims, wherein the thickness of the geotextile structure ranges from 0.3 to 8 mm, preferably from 0.6 to 5 mm, more preferably from 1 to 3 mm.

5. The biodegradable geotextile structure according to any of the previous claims, wherein the woven fabric structure is an open weave selected from plain weave, leno weave, semi-leno weave or stabilised textile grid.

6. The biodegradable geotextile structure according to any of the previous claims, wherein the biodegradable polymer is present as an add-on in an amount from 5 to 30 wt.%, preferably from 8 to 20 wt.%.

7. The biodegradable geotextile structure according to any of the previous claims, wherein the activated carbon is present as an add-on in an amount from 3 to 25 wt.%, preferably from 5 to 15 wt.%.

8. The biodegradable geotextile structure according to any of the previous claims, wherein the activated carbon immobilised within the mesh apertures is configured to reduce the bioavailability of allelochemical compounds in the superficial soil layer through physicochemical adsorption.

9. The biodegradable geotextile structure according to claim 8, wherein the reduction of allelochemical bioavailability occurs predominantly within the upper 1 to 5 cm of soil, creating a superficial reactive biochemical zone favourable to seed germination and root development.

10. The biodegradable geotextile structure according to any of the previous claims, wherein the immobilised activated carbon and biodegradable polymer system is compatible with soil microbiota and does not exert phytotoxic or microbiocidal effects under agronomic soil conditions.

11. The biodegradable geotextile structure according to any of the previous claims wherein the filament yarns are selected from a list consisting of jute filament yarn, coconut coir filament yarn, hemp filament yarn, cotton filament yarn, flax (linen) filament yarn, polylactic acid filament yarn, polyhydroxyalkanoates filament yarn, polybutylene succinate filament yarn, algae-based filament yarn, silk filament yarn, soy protein filament yarn, biopolymer-coated natural yarn, and their combinations.

12. The biodegradable geotextile structure according to any of the previous claims wherein the particle size of the particles of activated carbon ranges from 0.5 µm to 5 mm as determined by laser diffraction for particles below 500 µm and by sieve analysis for particles above 500 µm.

13. The geotextile structure according to any of the previous claims, wherein the open woven configuration and discontinuous polymer impregnation provide combined water retention and drainage capacity suitable for dry and high-rainfall conditions.

14. Geotextile mat, sheet or roll comprising the biodegradable geotextile structure according to any of the previous claims.

15. A method for producing a biodegradable geotextile structure as described in any of the claims 1 to 14, comprising the steps of:
weaving a fabric structure from filament yarns of natural fibers to form a mesh having apertures; impregnating or coating the woven fabric with a suspension comprising activated carbon particles and at least one biodegradable polymer selected from PLA, PHA or mixtures thereof, the suspension having a solids content selected such that the polymer is deposited as a discontinuous coating without forming a continuous film;
controlling pick-up level, viscosity and drying conditions so as to immobilise the activated carbon within the mesh apertures while preserving open inter-fibre porosity and water permeability of the geotextile.
